# EUROPÄISCHE PATENTANMELDUNG

(11) **EP 4 796 072 A1**
(43) Veröffentlichungstag der Anmeldung: **26.08.2026**
(21) Anmeldenummer: 26159044.2
(22) Anmeldetag: 17.02.2026
(51) Int. Cl.: A61C 8/00

(54) **CONTAINER FÜR DENTALIMPLANTATE**

(30) Priorität: 24.02.2025 DE 102025106814
(71) Anmelder: Gebrüder Klöcker GmbH, 46325 Borken-Weseke (DE)
(72) Erfinder: SCHWEMMLEIN, Christoph, 90478 Nürnberg (DE); WITT, Andreas, 46325 Borken (DE)
(74) Vertreter: Walther Bayer Faber Patentanwälte PartGmbB

(57) **Zusammenfassung**

Die Erfindung betrifft einen Container (1) für ein Dentalimplantat (10), aufweisend einen Aufnahmekörper (11) mit einem Aufnahmeraum (12), der sich in einer Hauptachse (13) erstreckt, wobei im Aufnahmeraum (12) ein Einlegeelement (14) eingebracht ist, in das das Dentalimplantat (10) mit seiner Längsachse (15) so einlegbar ist, sodass diese mit der Hauptachse (13) zusammenfällt, und aufweisend ein Deckelelement (16), das zwischen einer Schließstellung und einer Öffnungsstellung schwenkbeweglich am Aufnahmekörper (11) angeordnet ist, wobei am Deckelelement (16) ein Spannelement (17) angeordnet ist, sodass das Dentalimplantat (10) in der Schließstellung des Deckelelementes (16) zwischen dem Einlegeelement (14) und dem Spannelement (17) mit wenigstens einer Haltekraft (F) fixierbar ist, wobei die Haltekraft (F1, F2) senkrecht zur und/oder in der Hauptachse (13) liegend verläuft. Erfindungsgemäß ist das Einlegeelement (14) im Aufnahmekörper (11) und/oder das Spannelement (17) im Deckelelement (16) über jeweils zumindest wenigstens eine Rastverbindung (18) haltend angeordnet, wobei die Rastverbindung (18) so ausgeführt ist, dass eine Fügerichtung (19) zum Verrasten der jeweiligen Rastverbindung (18) senkrecht zur Hauptachse (13) verläuft.

## Beschreibung

Die Erfindung betrifft einen Container für ein Dentalimplantat, aufweisend einen Aufnahmekörper mit einem Aufnahmeraum, der sich in einer Hauptachse erstreckt, wobei im Aufnahmeraum ein Einlegeelement eingebracht ist, in das das Dentalimplantat mit seiner Längsachse so einlegbar ist, dass diese mit der Hauptachse zusammenfällt, und aufweisend ein Deckelelement, das zwischen einer Schließstellung und einer Öffnungsstellung schwenkbeweglich am Aufnahmekörper angeordnet ist, wobei am Deckelelement ein Spannelement angeordnet ist, sodass das Dentalimplantat in der Schließstellung des Deckelelementes zwischen dem Einlegeelement und dem Spannelement mit wenigstens einer Haltekraft fixierbar ist, wobei die Haltekraft senkrecht zur und/oder in der Hauptachse liegend verläuft.

### STAND DER TECHNIK

Mit dem Begriff Dentalimplantat wird allgemein ein Ersatz für die Zahnwurzel bezeichnet, welcher in den Kieferknochen eines Patienten eingeschraubt wird. Komplettiert wird der Zahnersatz nach Abschluss des Einheilungsprozesses mit der Zahnkrone und dem verbindenden Element, dem sogenannten Abutment. Diese beiden Bestandteile benötigen keine derart sterile Verpackung wie das Dentalimplantat selbst und diese sind daher einfacher in der Handhabung. Dazu gehört noch eine sogenannte Einheilschraube oder ein Gingivaformer, die ein Gewinde im Dentalimplantat über die Dauer des Einheilprozesses verschließt, wobei ein Gingivaformer nach der Implantation zusätzlich das Zahnfleisch formt.

Auf den Vorgang der Implantation selbst wird in nachstehend aufgeführten Schriften näher eingegangen, daher sei an dieser Stelle darauf verzichtet. Erwähnt sei nur, dass es sich dabei um eine Operation am offenem Gewebe, Knochen und Gefäßen handelt, daher ist eine Sterilität und eine äußerste Sauberkeit im Umgang mit dem Dentalimplantat zu jedem Zeitpunkt gefordert. Die Sterilität des Implantats und des Containers wird durch eine weitere keimfreie und keimdichte Verpackung in Form eines Blisters dargestellt, solange dieser nicht geöffnet wird oder seine maximale Lagerdauer überschritten wird.

Aus der Vergangenheit sind Container bekannt, die aus einem sogenannten primären Teil bestehen, welches gegenüber einem sekundären Teil ein keimfrei abgedichtetes Volumen beinhaltet und dadurch eine sterile Unterbringung des Implantats ermöglicht. Der sekundäre Teil ist nicht steril und bietet lediglich eingeschränkten Schutz gegen Umwelteinflüsse wie beispielsweise Staub und Feuchtigkeit. Im einfachsten Fall bildet dieser lediglich eine Umverpackung, welche bezüglich Reinheit der Umgebung gleichgestellt ist. Damit ist diese nur von untergeordneter medizinischer Bedeutung und daher in folgenden Patentschriften oftmals entweder nicht oder nicht näher beschrieben.

Eine neue, weiterentwickelte Generation von Containern wird in der EP 2 745 800 B1 offenbart, welche sich grundlegend von den Vorgängern nicht nur in der Abweichung von der zylindrischen Form und Befestigung des Implantats unterscheidet.

Vielmehr und insbesondere dadurch, dass die Sterilität durch eine zweite, aus dünnem flexiblen Kunststoff bestehende, weitere Hülle in Form eines keimfrei abdichtenden Blisters dargestellt wird, wird der darin liegende, eigentliche Container von der Aufgabe befreit, ein gegenüber der Umwelt abgedichtetes, steriles Volumen bereitzustellen und ist daher wesentlich einfacher aufgebaut. Der Nachteil dieser Lösung besteht darin, dass der zusätzliche Arbeitsgang der Entfernung des Deckels notwendig ist, der zudem noch unkontrolliert wegfallen kann, da er nicht mit beispielsweise einer Lasche mit dem Gehäuse verbunden bleibt, und spätestens dann nicht mehr steril ist. Zudem ist der Offenbarung zufolge das Implantat innerhalb der vorgestellten Form des Containers nicht direkt sichtbar, sondern nur indirekt mit Aufklebern oder einer zusätzlichen Farbcodierung identifizierbar. Beide Möglichkeiten der Identifizierung bergen die Gefahr von Verwechslungen, zumal die Anbieter von Implantaten unterschiedliche Farbcodierungen verwenden, was nicht im Sinne der Patientensicherheit ist.

Ein Blister mit Sterilbarriere wird beispielsweise in der EP 4 147 671 A1 beschrieben, dessen Innenraum nach Aufnahme des Containers luft- und keimdicht versiegelt wird. Die Sterilisation des Innenraums einschließlich des darin befindlichen Implantats erfolgt auf verschiedene Weise, z.B. durch eine Erhitzung auf hohe Temperatur, eine Begasung oder eine energiereiche ionisierende Bestrahlung.

Diese einmal aufgebaute Sterilität wird mit der Wahl eines geeigneten Materials für die Abdichtung und das Kunststoffmaterial des Blisters selbst eine gewisse Zeit, also ungeöffnet und vorschriftsgemäß gelagert, einige wenige Jahre aufrecht erhalten und mit einem außen auf dem Blister sichtbaren Ablaufdatum versehen.

Schließlich zeigt die DE 10 2023 127 214 B3 einen Container für ein Dentalimplantat, aufweisend einen Aufnahmekörper mit einem Aufnahmeraum, der sich in einer Hauptachse erstreckt, wobei im Aufnahmeraum ein Einlegeelement eingebracht ist, in das das Dentalimplantat mit seiner Längsachse so einlegbar ist, dass diese mit der Hauptachse zusammenfällt, und aufweisend ein Deckelelement, das zwischen einer Schließstellung und einer Öffnungsstellung schwenkbeweglich am Aufnahmekörper angeordnet ist, wobei am Deckelelement ein Spannelement angeordnet ist, sodass das Dentalimplantat in der Schließstellung des Deckelelementes zwischen dem Einlegeelement und dem Spannelement mit wenigstens einer Haltekraft fixierbar ist, wobei eine radiale Haltekraft senkrecht zur Hauptachse verläuft und eine Haltekraft in der Hauptachse liegt. Diese Bauform des Containers löst im Wesentlichen alle vorausgenannten Nachteile und Probleme, da die Handhabung des Dentalimplantates auch für ungeübte Benutzer einfach ist und berührungslos stattfinden kann, während die Sterilität des Dentalimplantates gewahrt bleibt. Die Herstellung und insbesondere die Montage des Containers erfordert jedoch mehrere Schritte und automatisierte Bewegungen aus mehreren Richtungen, die aufwändig sind und eine Anlagentechnik zusätzlich verteuern.

### OFFENBARUNG DER ERFINDUNG

Die Aufgabe der Erfindung besteht in der Verbesserung eines Containers für ein Dentalimplantat, der möglichst einfach herstellbar und einfach montierbar ist.

Diese Aufgabe wird ausgehend von einem Container gemäß dem Oberbegriff des Anspruches 1 mit den kennzeichnenden Merkmalen gelöst. Vorteilhafte Weiterbildungen der Erfindung sind in den abhängigen Ansprüchen angegeben.

Die Erfindung schließt die technische Lehre ein, dass das Einlegeelement im Aufnahmekörper und/oder das Spannelement im Deckelelement über jeweils zumindest wenigstens eine Rastverbindung haltend angeordnet ist, wobei die Rastverbindung so ausgeführt ist, dass eine Fügerichtung zum Verrasten der jeweiligen Rastverbindung senkrecht zur Hauptachse verläuft.

Kerngedanke der Erfindung ist die einfache Verrastung des Einlegeelementes im Aufnahmekörper oder des Spannelementes im oder am Deckelelement, wobei der besondere Vorteil dadurch entsteht, dass die Verrastung aus einer Richtung erfolgen kann, die senkrecht zur Hauptachse des Aufnahmekörpers ausgerichtet ist und damit auch der eigentlichen Fügerichtung des Einlegeelementes in den Aufnahmekörper oder des Spannelementes an das Deckelelement entspricht. Diese Richtung kann dabei auch der Richtung entsprechen, die senkrecht auf der Teilungsebene des Spritzgusswerkzeugs liegt, mit dem der Aufnahmekörper aus Kunststoff hergestellt wird. Durch die gleiche Richtung des Werkzeughubes im Spritzguss und der Montagerichtung des Einlegeelementes im Aufnahmekörper sowie des Spannelementes an das Deckelelement entsteht eine vereinfachte Handhabung der Bauteile für die Montage. Gleiches gilt für die Herstellung des Deckelelementes im Spritzguss, sodass das Spannelement aus einer Richtung an das Deckelelement angesetzt und verrastet werden kann, die senkrecht auf der Teilungsebene der Spritzguss - Werkzeughälften zur Herstellung des Deckelelementes liegt.

Der Vorteil des so gebildeten Containers ist die klemmende Aufnahme des Dentalimplantates zwischen dem Einlegeelement und dem Spannelement, wobei beim Überführen des Deckenelementes in die Schließstellung zwischen dem Spannelement und dem Einlegeelement über das dazwischen angeordnete Dentalimplantat eine Haltespannung aufgebaut wird. Das ermöglicht die spielfreie Aufnahme des Dentalimplantates im Container, und durch die klemmende Anordnung des Dentalimplantates zwischen dem Einlegeelement und dem Spannelement kann ein Bediener einen Einbringschlüssel in das Dentalimplantat einsetzen. Hat der Bediener den Einbringschlüssel in das Dentalimplantat eingesetzt, kann das Deckelelement in der Schwenkebene von der Schließstellung in die Öffnungsstellung überführt werden und das Dentalimplantat kann aus der Position im Einlegeelement herausgehoben werden. Ein weiterer Vorteil ist insbesondere auch, dass das Dentalimplantat zur haltenden Anordnung im Container keinen Befestigungsadapter oder sonstiges Bauteil benötigt, das bei der Entnahme entfernt und entsorgt werden muss, weil das Deckelelement im Verbund mit dem Spannelement sowohl ein Verschlussmittel als auch ein Halte- bzw. Klemmmittel bildet.

Der Aufnahmekörper bildet einen unteren Teil des Containers, in dem das Dentalimplantat entlang einer Hauptachse im Aufnahmekörper eingelegt werden kann und das Deckelelement bildet einen oberen Teil des Containers, der einen nach oben offenen Aufnahmeraum im Aufnahmekörper in der Schließstellung abdeckt und damit schließt. Ist das Dentalimplantat eingelegt, so fällt die Längsachse des Dentalimplantates mit der Hauptachse des Aufnahmekörpers zusammen oder verläuft wenigstens parallel zu dieser, die sich durch den Aufnahmeraum erstreckt. Die schwenkbewegliche Aufnahme des Deckelelementes am Aufnahmekörper ermöglicht eine Verdrehung oder Verschwenkung des Deckelelementes in einer Drehachse, wobei die Drehachse senkrecht auf der Schwenkebene steht, die durch die Schwenkbewegung des Deckelelementes zwischen der Schließstellung und der Öffnungsstellung definiert ist. Die Längsachse des Dentalimplantates liegt dabei parallel beabstandet unterhalb der Schwenkebene des Deckelelementes, und die Schwenkachse des Deckelelementes verläuft senkrecht zur Hauptachse.

Das Deckelelement ist im einfachsten Fall als Plankörper ausgebildet, sodass dieses wenigstens den Bereich des Aufnahmeraums des Aufnahmekörpers in der Schließstellung abdeckt, dieses jedoch auch in der Öffnungsstellung am Aufnahmekörper verbleibt und die Schwenkbewegung ausführen kann.

Die Hauptachse kann mit der Längsachse des Dentalimplantates zusammenfallen oder zumindest zu dieser parallel verlaufen, wenn dieses im Aufnahmekörper eingelegt ist, wobei das Spannelement so ausgebildet ist, dass eine radiale Haltekraft senkrecht zur Hauptachse des Aufnahmekörpers und damit auch senkrecht zur Längsachse des eingelegten Dentalimplantates verläuft, wenn sich das Deckelelement in der Schließstellung befindet.

Der Aufnahmekörper kann entlang seiner Hauptachse länglich ausgebildet sein, wobei der Aufnahmekörper seitlich zu seiner Längsachse eine entsprechend dem Deckelelement große Öffnung aufweist, durch die das Einlegeelement eingesetzt und bodenseitig im Aufnahmekörper verrastet wird. Für den späteren Gebrauch kann das Deckelelement von der Öffnung durch die Schwenkbewegung wegbewegt werden, um die große Öffnung freizulegen, das Dentalimplantat schließlich einzulegen bzw. zu entnehmen.

Die Bodenseite des Aufnahmekörpers liegt dabei der Öffnung gegenüber und wird durch einen Bodenabschnitt des Aufnahmekörpers gebildet, in den die Rastverbindung eingebracht ist. So kann das Einlegeelement bodenseitig im Aufnahmekörper verrastet werden, wobei die Bodenseite den Aufnahmeraum des Aufnahmekörpers unterseitig begrenzt, während oberseitig die Öffnung vorgesehen ist, die beim Verschließen des Containers mit dem Deckelelement verschlossen wird.

Das Spannelement kann einen ersten Abschnitt aufweisen, der in der Schließstellung des Deckelelementes seitlich an das Dentalimplantat zur Anlage bringbar ist und sich in gewisser Weise parallel zum flächigen Deckelelement erstreckt. Dieser erste Abschnitt kann an die Mantelfläche und/oder an das Gewinde des Dentalimplantates zur Anlage gelangen, wodurch die radiale Haltekraft auf das Dentalimplantat aufbaubar ist. Ferner weist das Spannelement einen zweiten Abschnitt auf, der in der Schließstellung des Deckelelementes stirnseitig bzw. endseitig an das Dentalimplantat zur Anlage bringbar ist und eine axiale Haltekraft auf das Dentalimplantat in seiner Längsachse aufbaubar ist. Demnach ist das Spannelement mit den wenigstens zwei Abschnitten einteilig ausgebildet, wobei die beiden Abschnitte auch als Einzelteile ausgebildet sein können, die gemeinsam das Spannelement bilden.

Für eine definierte Aufnahme des Dentalimplantates ist das Einlegeelement mit einer V-förmigen Einlegekehle ausgebildet, in der das Dentalimplantat eingelegt werden kann, sodass in radialer Richtung zwischen der V-förmigen Einlegekehle und dem ersten Abschnitt des Spannelementes die radiale Haltekraft aufbaubar ist und für das Dentalimplantat in radialer Richtung gesehen eine Dreipunktaufnahme oder eine Dreilinienaufnahme gebildet wird, wenn das Deckelelement in die Schließstellung überführt wird. Dabei kann das Dentalimplantat aufgrund der konischen Form auch nur über einen Kragen mit größtem Durchmesser gehalten sein.

Die Rastverbindung kann jeweils einen Rasthaken und eine Rastöffnung umfassen, die so zueinander ausgestaltet sind, dass beim Fügen des Einlegeelementes am Aufnahmekörper und/oder des Spannelementes am Deckelelement der Rasthaken in der Rastöffnung verrastet. Eine Verrastung im Sinne der vorliegenden Erfindung stellt eine formschlüssige Verbindung dar, die dann entsteht, wenn wenigstens ein Teil des Rasthakens formschlüssig in die Rastöffnung eingreift, d.h. eine Kante oder einen Rand der Öffnung hintergreift, was ermöglicht wird, wenn sich zumindest ein Bestandteil der an der Rastverbindung beteiligten Bauteile zumindest abschnittsweise elastisch verbiegt und für den eingerasteten Zustand zurückfedert. Die Rastverbindung kann dabei wiederlösbar sein oder die Rastverbindung ist nach der Verrastung nicht mehr lösbar, was zu bevorzugen ist. Damit sichergestellt ist, dass sich das Einlegeelement nicht ungewollt aus dem Aufnahmekörper löst. Gleiches gilt für die Verrastung des Spannelementes am Deckelelement.

Zusammenfassend kann insofern gesagt werden, dass die Rastverbindung insbesondere mit dem Rasthaken und der Rastöffnung einen Formschluss zwischen dem Einlegeelement und dem Aufnahmekörper bzw. dem Spannelement und dem Deckelelement bildet.

Das Einlegeelement und/oder das Spannelement kann jeweils aus einem metallischen Bauteil, insbesondere aus einem Blechelement und/oder aus einem Titanwerkstoff, gebildet sein. Insbesondere können der Aufnahmekörper und das Deckelelement aus einem Kunststoff und/oder einem Copolymer in einem Spritzgussverfahren hergestellt sein.

Der Rasthaken ist vorzugsweise am Aufnahmekörper und/oder am Deckelelement ausgebildet, also aus einem Kunststoffwerkstoff, während die Rastöffnung am Einlegeelement und/oder am Spannelement ausgebildet ist. Der oder die Rasthaken können am Aufnahmekörper und am Deckelelement im Spritzgussverfahren einteilig mit dem oder an dem Aufnahmekörper bzw. mit oder an dem Deckelelement ausgebildet oder angeformt sein. Es ist aber ebenfalls möglich, dass der Rasthaken am Einlegeelement und/oder am Spannelement angeordnet ist, während die Rastöffnung am Aufnahmekörper bzw. am Deckelelement angeordnet ist.

Die Rastöffnung kann insofern am Einlegeelement und/oder am Spannelement beispielsweise durch eine fensterartige Aussparung im Blechelement ausgebildet sein. Beispielsweise können die Rasthaken am Aufnahmekörper und/oder am Deckelelement mittels einer jeweiligen Öffnung freigelegt werden, in die die Rasthaken hineinragen. Die Öffnungen können im Spritzguss zur Herstellung des Aufnahmekörpers bzw. des Deckelelementes bereits vorgesehen werden.

Das Einlegeelement weist zudem eine hinterseitige Druckplatte auf, sodass die axiale Haltekraft in der Hauptachse zwischen dem zweiten Abschnitt des Spannelementes und der hinterseitigen Druckplatte aufbaubar ist, wenn das Deckelelement in die Schließstellung überführt wird. So kann das Dentalimplantat sowohl radial als auch axial definiert zwischen dem Einlegeelement und dem Spannelement gehalten werden. Die hinterseitige Druckplatte kann insbesondere aus einem rückwärtigen Bereich des Einlegeelementes ausgeschnitten und umgefalzt werden, derart, dass die Hauptachse des Aufnahmekörpers bzw. die Längsachse des Dentalimplantates senkrecht auf der hinterseitigen Druckplatte steht, wenn das Einlegeelement im Aufnahmekörper eingesetzt und verrastet ist und wenn das Dentalimplantat im Einlegeelement einliegt.

Das Einlegeelement und/oder das Spannelement ist beispielsweise aus einem Stanz-Biegebauteil, insbesondere aus einem Blechelement, gebildet oder mittels einem Laserstrahlwerkzeug aus einem Blech ausgeschnitten und anschließend gebogen worden. Zudem ist es von Vorteil, wenn das Einlegeelement und/oder das Spannelement einen Titanwerkstoff aufweist, sodass das Dentalimplantat bei der Aufbewahrung im Container nur mit dem Titanwerkstoff in Kontakt gelangt und nicht mit dem Kunststoff des Aufnahmekörpers oder des Deckelelementes. Durch die Anordnung des Dentalimplantates zwischen dem Einlegeelement und dem Spannelement hat dieses ausschließlich Berührung mit diesen beiden Bauteilen, sodass keine Fremdkörperberührung mit Bauteilen stattfindet, die nicht aus dem Eigenwerkstoff des Dentalimplantates bestehen, also auch nicht mit dem Werkstoff des Aufnahmekörpers und/oder des Deckelelementes.

Gemäß einem weiteren vorteilhaften Aspekt der Erfindung kann der Aufnahmekörper neben der seitlichen großen Öffnung auch mit einer vorderseitigen bzw. stirnseitigen Öffnung ausgebildet sein, die mit einer Aussparung des zweiten Abschnittes des Spannelementes korrespondiert, sodass das Dentalimplantat stirnseitig zugänglich bleibt, auch wenn das Deckelelement in die Schließstellung überführt wird. Im Ergebnis kann der Bediener seinen Einbringschlüssel zum Einsetzen in die Werkzeugaufnahme des Dentalimplantates auch dann einsetzen, wenn sich das Deckelelement am Aufnahmekörper in der Schließstellung befindet, da dieses aufgrund der vorderseitigen, stirnseitigen Öffnung des Aufnahmekörpers und aufgrund der Aussparung im zweiten Abschnitt des Spannelementes und/oder auch aufgrund des Designs des Deckelelementes frei zugänglich ist.

Der zweite Abschnitt des Spannelementes zur Bildung der Aussparung kann hierzu vorteilhafterweise gabelförmig ausgeführt sein und gegen die Stirnseite des Dentalimplantates um die zentral im Dentalimplantat eingebrachte Werkzeugaufnahme herum zur Anlage gebracht werden, um das Dentalimplantat mit dem zweiten Abschnitt des Spannelementes gegen die hinterseitige Druckplatte zu drücken. Der zweite Abschnitt des Spannelementes umschließt insofern die zentral im Dentalimplantat eingebrachte Werkzeugaufnahme, wenn das Deckelelement geschlossen ist und kann seine axiale Spannwirkung trotzdem entfalten.

Die Gelenkverbindung zur schwenkbaren Aufnahme des Deckelelementes am Aufnahmekörper weist eine Gelenkachse auf, die einteilig mit dem Deckelelement ausgebildet sein kann und die in einer Achsenaufnahme im Aufnahmekörper eingesetzt ist. Die Gelenkachse kann senkrecht aus der Erstreckungsebene des Deckelelementes hervorstehen und die Aachenaufnahme durchdringen. Um mit der Gelenkachse das Deckelelement verliersicher am Aufnahmekörper anzuordnen, weist die Gelenkachse an ihrem freien Ende abragende Flügel auf, und wobei die Achsenaufnahme eine Innenkontur aufweist, durch die die Gelenkachse mit den abragenden Flügeln hindurchgeführt werden kann. Für eine geometrische Überdeckung der Gelenkachse mit den Flügeln, und folglich für eine Hindurchführbarkeit der Gelenkachse mit den Flügeln durch die Achsenaufnahme muss das Deckelement in eine Verschwenkposition verschwenkt werden, die über die Öffnungsposition hinausgeht. Ist die Gelenkachse mit den Flügeln durch die Achsenaufnahme hindurchgeführt worden und wird das Deckelelement wieder in den Bereich zwischen der Schließstellung und der Öffnungsstellung zurückgeschwenkt, bilden die Flügel am freien Ende der Gelenkachse einen geometrischen Formschluss auf der Hinterseite des Aufnahmekörpers, sodass das Deckelement im Ergebnis verliersicher am Aufnahmekörper angeordnet ist.

Weiterhin kann der Aufnahmekörper einen Steckplatz aufweisen, in den eine Einheilschraube einsetzbar ist, wobei die Einheilschraube gegen ein Herausfallen gesichert ist, wenn das Deckelelement in die Schließstellung überführt wird. Die Einheilschraube wird damit direkt mit dem Dentalimplantat bereitgestellt, da diese regelmäßig auch benötigt wird, wenn das Dentalimplantat im Kieferknochen des Patenten eingesetzt wurde. Mit der Einheilschraube kann die Werkzeugaufnahme im Dentalimplantat über die Dauer des Einheilprozesses verschlossen werden. Ferner können im Aufnahmekörper weitere Aufnahmevertiefungen vorhanden sein, in denen Teile verliersicher eingelegt werden können.

Das Deckelelement kann eine die flächige Erstreckung begrenzende Kontur aufweisen, die der Kontur des Aufnahmekörpers entspricht. Auch ist es denkbar, dass das Deckelelement wenigstens teiltransparent ist, sodass das Dentalimplantat auch bei einem geschlossenen Deckel für einen Betrachter von außen sichtbar ist. Schließlich kann das Deckelelement auch einen nachgiebigen, gegebenenfalls federnden Bereich aufweisen, beispielsweise eine Federzunge durch einen eingeschlitzten Bereich oder dergleichen, auf den der Benutzer mit den Fingern eine Kraft aufbringen kann, wenn das Einbringwerkzeug zur Entnahme in die Werkezugaufnahme im Dentalimplantat eingesetzt wird und anschließend das Dentalimplantat aus dem Container entnommen wird.

### BEVORZUGTES AUFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine perspektivische Ansicht des Containers mit einem einliegenden Dentalimplantat und mit einem halb geöffneten Deckelelement in Anordnung am Aufnahmekörper;
- Figur 2: den Container mit einem einliegenden Dentalimplantat und mit dem Deckelelement in der vollen Öffnungsstellung;
- Figur 3: eine Explosionsdarstellung des Container mit seinen Bestandteilen sowie mit einem Dentalimplantat und mit einer Einheilschraube;
- Figur 4: eine Ansicht des Aufnahmekörpers und einem aus diesem entnommenen Einlegeelement und
- Figur 5: eine Ansicht des Deckelelementes und einem von diesem entnommenen Spannelement.

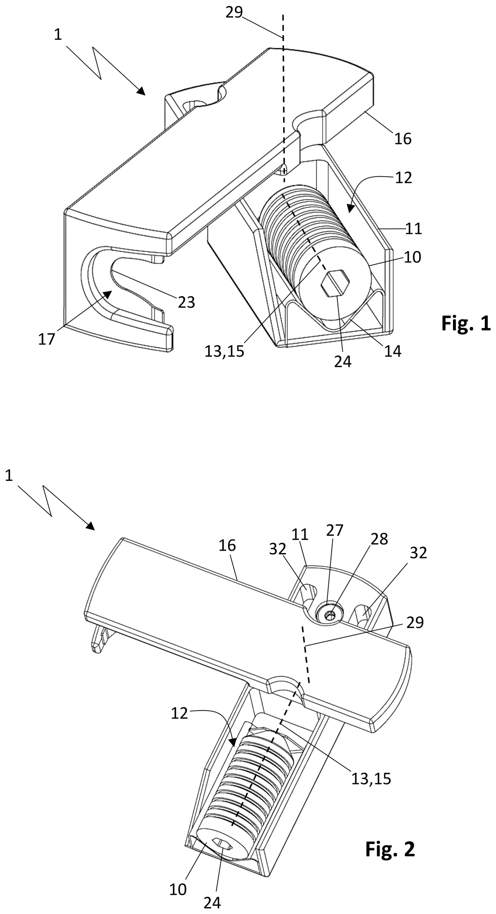

Figur 1 und Figur 2 zeigen den Container 1 mit dem Aufnahmekörper 11, der einen Grundkörper bildet, und mit einem teilgeöffneten Deckelelement 16 (Figur 1), wobei das Deckelelement 16 um die Schwenkachse 29 verschwenkbar am Aufnahmekörper 11 angeordnet ist. Das Deckelelement 16 ist in einer halb geöffneten Stellung gezeigt, sodass ein Aufnahmeraum 12 des Aufnahmekörpers freigegeben ist, in dem ein Dentalimplantat 10 einliegt.

Das Deckelelement 16 ist in einer Verschwenkebene zwischen einer Schließstellung und einer Öffnungsstellung beweglich. Innenseitig im Deckelelement 16 ist ein Spannelement 17 eingebracht, das in der Schließstellung des Deckelelementes 16 oberseitig gegen die Mantelfläche des Dentalimplantates 10 zur Anlage kommt und dabei bestenfalls leicht einfedert.

Das Deckelelement 16 kann in eine volle Öffnungsstellung am Aufnahmekörper 11 überführt werden (Figur 2), sodass der Aufnahmeraum 12 mit dem darin eingelegten Dentalimplantat 10 frei zugänglich ist.

Der Aufnahmekörper 11 weist eine Hauptachse 13 auf, die mit einer Längsachse 15 des Dentalimplantates 10 zusammenfällt, und das Dentalimplantat 10 erstreckt sich im Wesentlichen zylinderförmig oder kegel(stumpf)förmig um die Längsachse 15 und damit um die Hauptachse 13 herum. Das Dentalimplantat 10 kann als schraubenförmig oder kegelförmig angesehen werden, um in den Kieferknochen eines Patienten eingeschraubt zu werden. Hierfür weist das Dentalimplantat 10 eine Werkzeugaufnahme 24 auf, über die das Dentalimplantat 10 ohne weitere Berührung aus der Position im Aufnahmeraum 12 des Aufnahmekörpers 11 entnommen werden kann, um das Dentalimplantat 10 anschließend im Kieferknochen des Patienten einzuschrauben. Die Handhabung des Dentalimplantates 10 von der Entnahme aus dem Container 1 bis zum Einschrauben in den Kieferknochen des Patienten kann insofern vollständig mit einem Einbringschlüssel erfolgen, das in die Werkzeugaufnahme 24 eingesetzt ist, um insbesondere das Risiko von Fremdkörperberührungen des Dentalimplantates 10 zu vermeiden.

Bodenseitig im Aufnahmeraum 12 des Aufnahmekörpers 11 ist ein Einlegeelement 14 angeordnet, auf dem das Dentalimplantat 10 aufgenommen ist. Das Einlegeelement 14 besitzt durch seine M-Form eine nach oben offene V-förmige Einlegekehle, in der das etwa zylinderförmige Dentalimplantat 10 einliegt, sodass sich auf den beiden Seiten des V-förmigen Einlegeelementes 14 zwei Linienberührungen ergeben, über die das Dentalimplantat 10 auf dem Einlegeelement 14 aufliegt. Durch die Kegel(stumpf)form kann auch eine Berührung nur am größten Durchmesser des Implantates erfolgen, oder das Einlegeelement 14 und/oder das Spannelement 17 sind der Kegelform angepasst.

Wie weiterhin erkennbar ist, weist das Spannelement 17 stirnseitig zum Dentalimplantat 10 eine Aussparung 23 auf. Wird das Deckelelement 16 von der gezeigten, halb geöffneten Stellung in die Schließstellung überführt, so bleibt durch die Aussparung 19 die Werkzeugaufnahme 24 in der Stirnseite des Dentalimplantates 10 weiterhin zugänglich. Damit kann ein Bediener einen Einbringschlüssel in die Werkzeugaufnahme 24 einsetzen, obwohl der Container 1 noch mit einem geschlossenen Deckelelement 16 vorliegt. Hat der Bediener seinen Einbringschlüssel in die Werkzeugaufnahme 24 eingesetzt, so kann dieser das Deckelelement 16 in die volle Öffnungsstellung überführen, um schließlich das Dentalimplantat 10 aus der Anordnung Im Einlegeelement 14 zu entnehmen.

Auf einer dem Aufnahmeraum 12 abgewandten Seite im Aufnahmekörper 11 ist ein Steckplatz 27 gezeigt, in den eine Einheilschraube 28 eingesetzt ist. Durch die angedeutete Schwenkachse 29 zur Verschwenkung des Deckelelementes 16 am Aufnahmekörper 11 wird deutlich, dass die Einheilschraube 28 im geschlossenen Zustand des Deckelelementes 16 im Steckplatz 27 gesichert ist und wird das Deckelelement 16 in die Öffnungsstellung verschwenkt, so ist die Einheilschraube 28 frei entnehmbar. Ferner sind Aufnahmevertiefungen 32 gezeigt, in die weitere Teile eingelegt werden können.

Die Figuren 1 und 2 zeigen den Container 1 mit einer Öffnungsrichtung der Schwenkbewegung des Deckelelementes 16 um die Schwenkachse 29 für eine für die rechte Hand eines Benutzers optimierte Handhabung. Es ist aber genauso denkbar, dass die Öffnungsrichtung der Schwenkbewegung des Deckelelementes 16 aus der gezeigten Perspektive gegen den Uhrzeigeersinn erfolgen könnte, sodass eine für die linke Hand eines Benutzers optimierte Handhabung entsteht.

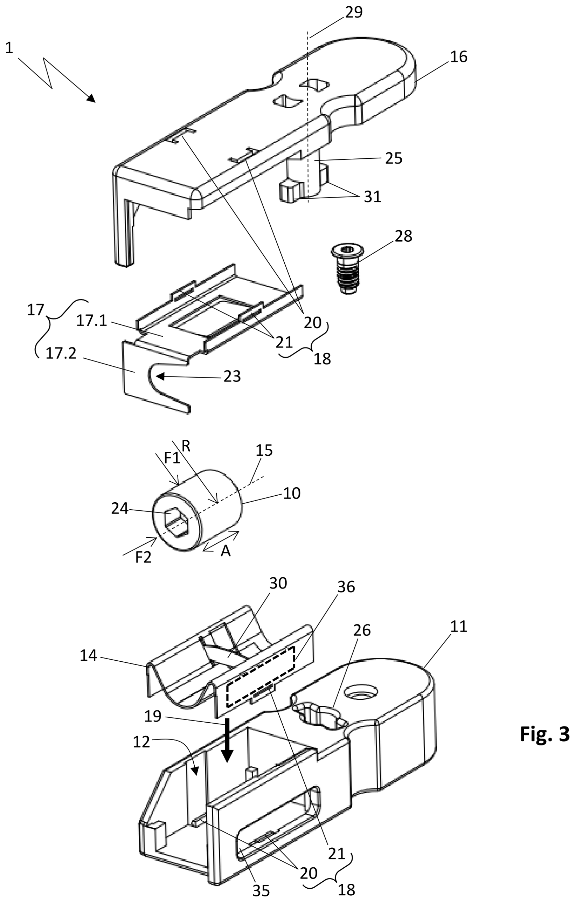

Figur 3 zeigt in einer Explosionsdarstellung den Container 1 mit seinen Bestandteilen einzeln. Zunächst ist oberseitig das Deckelelement 16 dargestellt, worauf unterhalb des Deckelelementes 16 in der Darstellung das Spannelement 17 folgt. Unterhalb des Spannelementes 17 sind das Dentalimplantat 10 sowie die Einheilschraube 28 gezeigt. Unterhalb des Dentalimplantates 10 ist das Einlegeelement 14 dargestellt, wobei den unteren Abschluss in der Explosionsdarstellung der Aufnahmekörper 11 bildet.

Der Aufnahmekörper 11 weist einen Aufnahmeraum 12 auf, in den zunächst das Einlegeelement 14 eingesetzt wird. Unterseitig am Einlegeelement 14 befinden sich Rastöffnungen 21, in die Rasthaken 20, die im Aufnahmekörper 11 eingebracht sind, eingerastet werden, wenn das Einlegeelement 14 aus der gezeigten Fügerichtung 19 in den Aufnahmeraum 12 eingesetzt wird. Durch die so hergestellte Rastverbindung 18 ist das Einlegeelement 14 fest und unverlierbar im Aufnahmeraum 12 des Aufnahmekörpers 11 angeordnet. Das Einlegeelement 14 weist eine V- förmige Einlegekehle auf, und wird das Dentalimplantat 10 in die Kehle des M-förmigen Einlegeelementes 14 eingelegt, so ergeben sich zwei seitliche Linienberührungen zwischen dem Dentalimplantat 10 und dem Einlegeelement 14, und wird das Deckelelement 16 mit dem innenseitigen Spannelement 17 geschlossen, entsteht der dritte Kontakt insbesondere aus der Linienberührung zwischen der Unterseite des Spannelementes 17 und dem Dentalimplantat 10.

Das Deckelelement 16 weist eine Gelenkachse 25 auf, die sich senkrecht aus der Erstreckungsebene des im wesentlichen flächigen Bestandteils des Deckelelementes 16 heraus erstreckt. Die Gelenkachse 25 definiert eine Schwenkachse 29, in der das Deckelelement 16 am Aufnahmekörper 11 verschwenkt werden kann. Am freien Ende der Gelenkachse 25 befinden sich seitlich abragende Flügel 31, wobei die Querschnittsforum der etwa zylinderförmigen Gelenkachse 25 und die sich gegenüberstehenden abragenden Flügel 31 mit der Querschnittsform einer Achsenaufnahme 26 im Aufnahmekörper 11 korrespondiert. Das Deckelelement 16 muss dabei so verschwenkt werden, dass die Kontur der Gelenkachse 25 mit den Flügeln 31 in die Kontur der Achsenaufnahme 26 hinein passt und durch diese hindurch geführt werden kann. um anschließend das Deckelelement 16 wieder in einen Bereich zu verschwenken, der definiert ist zwischen der Schließstellung und der Öffnungsstellung. Solange das Deckelelement 16 lediglich zwischen der Schließstellung und der Öffnungsstellung bewegt wird, kann insofern die Gelenkachse 25 nicht aus der Achsenaufnahme 26 heraus gelangen, da die Flügel 31 auf der Rückseite des Aufnahmekörpers 11 mit diesen einen Formschluss bilden.

Die Ansicht des Spannelementes 17 zeigt einen ersten Abschnitt 17.1 und einen zweiten Abschnitt 17.2, wobei die beiden Abschnitte 17.1 und 17.2 jeweilige Flächenbereiche aufweisen, die senkrecht zueinander stehen. Wird das Spannelement 17 innenseitig im Deckelelement 16 mit der Rastverbindung 18 befestigt, indem die Rasthaken 20 in den Rastöffnungen 21 verrastet werden, so befindet sich der erste Abschnitt 17.1 unterseitig vom flächigen Deckelelement 16 und der zweite Abschnitt 17.2 steht etwa senkrecht zum flächigen Abschnitt des Deckelelementes 16 und bildet einen stirnseitigen Abschluss relativ zum Aufnahmekörper 11. Der zweite Abschnitt 17.2 weist eine Aussparung 23 auf, die die Werkzeugaufnahme 24 frei gibt, wenn das Dentalimplantat 10 einliegt und das Deckelelement 16 geschlossen ist.

Wird das Einlegeelement 14 im Aufnahmeraum 12 des Aufnahmekörpers 11 bodenseitig verrastet, so steht eine Einlegekehle des M-förmigen Einlegeelementes 14 mit einer V-Form zur Aufnahme des Dentalimplantates 10 zur Verfügung. Im geschlossenen Zustand des Deckelelementes 16 kann zwischen dem Spannelement 17 und dem Einlegeelement 14 eine auf das Dentalimplantat 10 einwirkende radiale Haltekraft F1 senkrecht auf die Längsachse 15 aufgebaut werden, insbesondere indem ein Flächenabschnitt des ersten Abschnittes 17.1 des Spannelementes 17 leicht nachgibt, wodurch sich eine definierte Haltespannung aufbaut.

Das Einlegeelement 14 weist ferner eine hinterseitige Druckplatte 30 auf, und wird das Deckelelement 16 in die Schließstellung überführt, kann das Dentalimplantat 10 zwischen dem zweiten Abschnitt 17.2 des Spannelementes 17 und der Druckplatte 30 mit einer axialen Haltekraft F2 eingespannt werden, wobei die axiale Haltekraft F2 in der Längsachse 15 des Dentalimplantates 10 verläuft, die insofern mit dieser zusammenfällt. Die radiale Haltekraft F1 verläuft indes im Wesentlichen senkrecht auf die Längsachse 15 zu.

Auch das Einlegeelement 14 kann leicht nachgiebig ausgebildet sein, sodass bei geschlossenem Deckelelement 16 auch damit die radiale Haltekraft F1 zwischen dem Spannelement 17 und dem Einlegeelement 14 aufgebaut wird, was mit dem M-förmigen Profil des Einlegeelementes 14 bereits möglich ist. Sowohl das Einlegeelement 14 als auch das Spannelement 17 können mittels einem Laser aus einem Blechbauteil ausgeschnitten sein, das vorzugsweise aus Titan und in verschiedenen Größen bereitgehalten werden können, die an die Größen verschiedener Dentalimplantate 10 angepasst sind. Dies wird erreicht, indem verschieden geformte Einlegeelemente 14 bereitgestellt werden, die im Aufnahmekörper 11 eingerastet werden, abhängig vom Dentalimplantat 10, das im Container 1 aufgenommen werden soll.

Der Aufnahmekörper 11 besitzt an einer Seite eine Fensteröffnung 35, durch die das Einlegeelement 14 von der Seite sichtbar ist. Das Ausführungsbespiel zeigt ein Schriftfeld 36 auf dem Seitenbereich des Einlegeelementes 14, das mit der Position der Fensteröffnung 35 korrespondiert, sodass durch die Fensteröffnung 35 hindurch das Schriftfeld 36 von außen sichtbar ist. Das Schriftfeld 36 kann beispielsweise Informationen über die Spezifikationen des Dentalimplantates 10 umfassen, beispielsweise in Form einer Beschriftung, eines Aufklebers oder dergleichen. Insbesondere kann das Schriftfeld 36 eine Laserbeschriftung aufweisen, entweder eine mittels eines Lasers erzeugte Oberflächenbeschriftung oder mittels ausgelaserter Schrift. Die Beschriftung kann daher auch die Spezifikation, mithin also die Größe des Einlegeelementes 14 umfassen, die zur Spezifikation des Dentalimplantates 10 korrespondieren sollte.

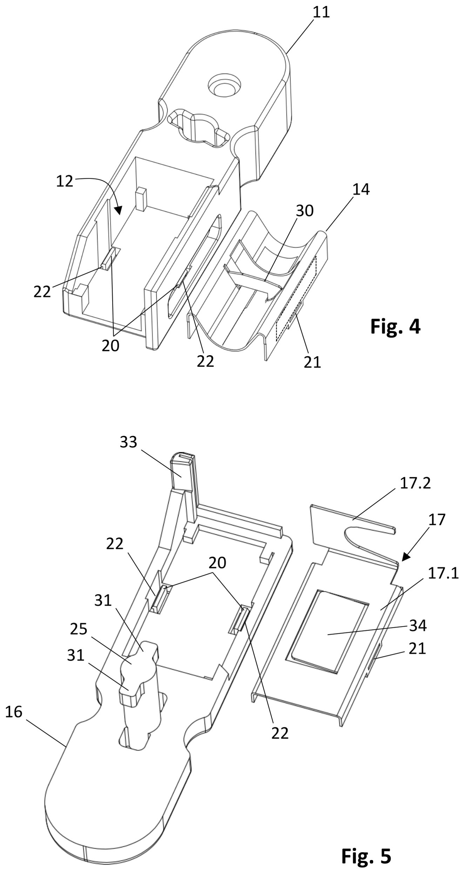

Die Figur 4 zeigt im Detail eine perspektivische und jeweils einzelne Ansicht des Aufnahmekörpers 11 und des Einlegeelementes 14. In der Ansicht sind im Aufnahmekörper 11 die Rasthaken 20 im Bodenbereich sichtbar, und dann, wenn das Einlegeelement 14 in den Aufnahmeraum 12 des Aufnahmekörpers 11 eingeführt wird, können die Rasthaken 20 am Aufnahmekörper 11 in Rastöffnungen 21 am Einlegeelement 14 verrasten. Die Verrastung erfolgt dabei von innen nach außen, da die Rasthaken 20 nach außen in Richtung zu den Seitenwänden des Aufnahmeraumes 12 hin weisen, sodass die Rastöffnungen 21 von innen mit den Rasthaken 20 durchgriffen werden. Es ist ebenso denkbar, dass die Rasthaken 20 am Einlegeelement 14 angeformt sind und die Rastöffnungen 21 können am Aufnahmekörper 11 angebracht sein.

Das Einlegeelement 14 besteht aus einem Titanblech und ist beispielsweise mit einem Laserstrahlwerkzeug ausgeschnitten und anschließend im Stanz- Biegeverfahren umgeformt worden. Bei diesen Umformvorgängen ist zugleich auch die Druckplatte 30 geformt worden, die aus einem hinteren Bereich mit dem Laser ausgeschnitten und anschließend etwa 90° nach oben umgebogen wurde. Damit kann die Druckplatte 30 den hinteren Anstoßbereich für das Dentalimplantat bilden. Die Rasthaken 20 am Einlegeelement 14 sind mittels einer jeweiligen Öffnung 22 freigelegt, in die die Rasthaken 20 hineinragen, sodass die Rastöffnung 21 gegen den Rasthaken 20 bewegt werden kann. Die Öffnung 22 kann mittels eines Laserschnittes freigelegt werden. Das Einlegeelement 14 kann vorzugsweise mittels eines Laserschneidwerkzeuges ausgeschnitten oder auch mechanisch ausgestanzt sein und einen Titanwerkstoff aufweisen.

Figur 5 zeigt eine Unteransicht des Deckelelementes 16, wobei vereinzelt neben dem dargestellten Deckelelement 16 das Spannelement 17 gezeigt ist. Das Spannelement 17 weist an seitlichen, umgeformten Bereichen jeweilige Öffnungen 21 auf, in die die Rasthaken 20 einrasten können, die am Einlegeelement 16 angeformt sind. Das Deckelelement 16 weist die Gelenkachse 25 mit den angeforderten Flügeln 31 auf. Ferner besitzt das Deckelelement 16 einen Stützabschnitt 33, in den der zweite Abschnitt 17.2 des Spannelementes 17 mit einer randseitigen Kante eingeschoben wird um entsprechend stabilisiert, wenn das Spannelement 17 innenseitig im Deckelelement 16 einliegt und verrastet ist.

Im Bereich des ersten Abschnittes 17.1 befindet sich eine federelastische Lasche 34, gegen die ein Benutzer mit der Hand bzw. einem Finger oder Daumen von außen eine Druckkraft aufbringen kann, um das Implantat über die federelastische Lasche 34 auf der einen Seite und über das Einlegeelement 14 auf der anderen Seite zu verklemmen, insbesondere dann, wenn ein Einbringwerkzeug in die Werkzeugaufnahme des Dentalimplantates eingesetzt werden muss. Die Rasthaken 20 am Deckelelement 16 sind mittels einer jeweiligen Öffnung 22 freigelegt, in die die Rasthaken 20 hineinragen, sodass die Rastöffnung 21 gegen die Rasthaken 20 bewegt werden kann. Die Öffnung 22 kann mit dem Design des Spritzgusswerkzeugs bereits bei der Herstellung erzeugt werden, um die Rasthaken 20 freizulegen und um das Einsetzen des Blechabschnittes mit der Rastöffnung 21 zu ermöglichen. Das Spannelement 17 kann vorzugsweise mittels eines Laserschneidwerkzeuges ausgeschnitten oder auch mechanisch ausgestanzt sein und einen Titanwerkstoff aufweisen. Auch im Zusammenhang mit der Rastverbindung zwischen dem Deckelelement 16 und dem Spannelement 17 kann gesagt werden, dass die Rasthaken 20 alternativ auch am Spannelement 17 und die Rastöffnungen 21 am Deckelement 16 angeordnet sein können.

Die Erfindung beschränkt sich in ihren Ausführungen nicht auf das vorstehend angegebenen bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste:

- 1: Container
- 10: Dentalimplantat
- 11: Aufnahmekörper
- 12: Aufnahmeraum
- 13: Hauptachse
- 14: Einlegeelement
- 15: Längsachse
- 16: Deckelelement
- 17: Spannelement
- 17.1: ersten Abschnitt
- 17.2: zweiter Abschnitt
- 18: Rastverbindung
- 19: Fügerichtung
- 20: Rasthaken
- 21: Rastöffnung
- 22: Öffnung
- 23: Aussparung
- 24: Werkzeugaufnahme
- 25: Gelenkachse
- 26: Achsenaufnahme
- 27: Steckplatz
- 28: Einheilschraube
- 29: Schwenkachse
- 30: Umgriff
- 31: Flügel
- 32: Aufnahmevertiefung
- 33: Stützabschnitt
- 34: federelastische Lasche
- 35: Fensteröffnung
- 36: Schriftfeld

- R: radiale Richtung
- A: axiale Richtung
- F1: radiale Haltekraft
- F2: axiale Haltekraft

## Patentansprüche

1. Container (1) für ein Dentalimplantat (10), aufweisend einen Aufnahmekörper (11) mit einem Aufnahmeraum (12), der sich in einer Hauptachse (13) erstreckt, wobei im Aufnahmeraum (12) ein Einlegeelement (14) eingebracht ist, in das das Dentalimplantat (10) mit seiner Längsachse (15) so einlegbar ist, dass diese mit der Hauptachse (13) zusammenfällt, und aufweisend ein Deckelelement (16), das zwischen einer Schließstellung und einer Öffnungsstellung schwenkbeweglich am Aufnahmekörper (11) angeordnet ist, wobei am Deckelelement (16) ein Spannelement (17) angeordnet ist, sodass das Dentalimplantat (10) in der Schließstellung des Deckelelementes (16) zwischen dem Einlegeelement (14) und dem Spannelement (17) mit wenigstens einer Haltekraft (F1, F2) fixierbar ist, wobei die Haltekraft (F1, F2) senkrecht zur und/oder in der Hauptachse (13) liegend verläuft,
**dadurch gekennzeichnet,**
**dass** das Einlegeelement (14) im Aufnahmekörper (11) und/oder das Spannelement (17) im Deckelelement (16) über jeweils zumindest wenigstens eine Rastverbindung (18) haltend angeordnet ist, wobei die Rastverbindung (18) so ausgeführt ist, dass eine Fügerichtung (19) zum Verrasten der jeweiligen Rastverbindung (18) senkrecht zur Hauptachse (13) verläuft.

2. Container (1) nach Anspruch 1,
**dadurch gekennzeichnet,**
**dass** das Spannelement (17) relativ zum Einlegeelement (14) so ausgebildet ist, dass eine radiale Haltekraft (F1) senkrecht zur Hauptachse (13) des Aufnahmekörpers (11) verlaufend auf das Dentalimplantat (10) aufbaubar ist, wenn das Deckelelement (16) in die Schließstellung geschwenkt wird.

3. Container (1) nach Anspruch 1 oder 2,
**dadurch gekennzeichnet,**
**dass** das Spannelement (17) ferner so ausgebildet ist, dass eine axiale Haltekraft (F2) in der Hauptachse (13) des Aufnahmekörpers (11) verlaufend auf das Implantat (10) aufbaubar ist, wenn sich das Deckelelement (16) in die Schließstellung geschwenkt wird.

4. Container (1) nach einem der Ansprüche 1 bis 3,
**dadurch gekennzeichnet,**
**dass** das Spannelement (17) einen ersten Abschnitt (17.1) aufweist, der in der Schließstellung des Deckelelementes (16) seitlich an die Mantelfläche und/oder das Gewinde des Dentalimplantates (10) zur Anlage bringbar ist und die radiale Haltekraft (F1) über den ersten Abschnitt (17.1) auf das Dentalimplantat (10) aufbaubar ist.

5. Container (1) nach einem der vorgenannten Ansprüche,
**dadurch gekennzeichnet,**
**dass** das Spannelement (17) einen zweiten Abschnitt (17.2) aufweist, der in der Schließstellung des Deckelelementes (16) stirnseitig an das Dentalimplantat (10) zur Anlage bringbar ist und über zweiten Abschnitt (17.2) die axiale Haltekraft (F2) auf das Dentalimplantat (10) aufbaubar ist.

6. Container (1) nach einem der vorgenannten Ansprüche,
**dadurch gekennzeichnet,**
**dass** die Rastverbindung (18) jeweils einen Rasthaken (20) und eine Rastöffnung (21) umfasst, die so zueinander ausgestaltet sind, dass beim Fügen des Einlegeelementes (14) am Aufnahmekörper (11) und/oder des Spannelementes (17) am Deckelelement (16) der Rasthaken (20) in der Rastöffnung (21) verrastet.

7. Container (1) nach einem der vorgenannten Ansprüche,
**dadurch gekennzeichnet,**
**dass** die Rastverbindung (18) insbesondere mit dem Rasthaken (20) und der Rastöffnung (21) einen Formschluss zwischen dem Einlegeelement (14) und dem Aufnahmekörper (11) bzw. dem Spannelement (17) und dem Deckelelement (16) bildet.

8. Container (1) nach einem der vorgenannten Ansprüche,
**dadurch gekennzeichnet,**
**dass** das Einlegeelement (14) und/oder das Spannelement (17) jeweils aus einem metallischen Bauteil, insbesondere aus einem Blechelement und/oder aus einem Titanwerkstoff, gebildet ist.

9. Container (1) nach einem der vorgenannten Ansprüche,
**dadurch gekennzeichnet,**
**dass** der Aufnahmekörper (11) und das Deckelelement (16) aus einem Kunststoff und/oder einem Copolymer in einem Spritzgussverfahren hergestellt sind.

10. Container (1) nach einem der vorgenannten Ansprüche,
**dadurch gekennzeichnet,**
**dass** der Rasthaken (20) am Aufnahmekörper (11) und/oder am Deckelelement (16) ausgebildet ist und dass die Rastöffnung (21) am Einlegeelement (14) und/oder am Spannelement (17) ausgebildet ist.

11. Container (1) nach einem der vorgenannten Ansprüche,
**dadurch gekennzeichnet,**
**dass** der oder die Rasthaken (20) am Aufnahmekörper (11) und am Deckelelement (16) im Spritzgussverfahren einteilig mit dem oder an dem Aufnahmekörper (11) bzw. dem Deckelelement (16) ausgebildet oder angeformt sind.

12. Container (1) nach einem der vorgenannten Ansprüche,
**dadurch gekennzeichnet,**
**dass** die Rastöffnung (21) am Einlegeelement (14) und/oder am Spannelement (17) durch eine fensterartige Aussparung im Blechelement ausgebildet sind.

13. Container (1) nach einem der vorgenannten Ansprüche,
**dadurch gekennzeichnet,**
**dass** die Rasthaken (20) am Aufnahmekörper (11) und/oder am Deckelelement (16) mittels einer jeweiligen Öffnung (22) freigelegt sind, in die die Rasthaken (20) hineinragen.

14. Container (1) nach einem der vorgenannten Ansprüche,
**dadurch gekennzeichnet,**
**dass** das Einlegeelement (14) eine hinterseitige Druckplatte (23) aufweist, sodass die axiale Haltekraft (F2) in der Hauptachse (13) des Aufnahmekörpers (11) und damit in axialer Richtung (A) zwischen dem zweiten Abschnitt (17.2) des Spannelementes (17) und der hinterseitigen Druckplatte (23) aufbaubar ist, wenn das Deckelelement (16) in die Schließstellung überführt wird.
